# FASCICULE DE BREVET EUROPEEN

(11) **EP 3 172 812 B1**
(45) Date de publication et mention de la délivrance du brevet: **06.06.2018**
(21) Numéro de dépôt: 15751054.6
(22) Date de dépôt: 22.07.2015
(51) Int. Cl.: H01M 12/08, H02J 7/00, H01M 10/44

(54) **PILOTAGE DE CHARGE D'UNE BATTERIE METAL-AIR**
AUFLADESTEUERUNG EINER LUFT-METALL-BATTERIE
CHARGE CONTROL OF A METAL-AIR BATTERY

(30) Priorité: 23.07.2014 FR 1457126
(43) Date de publication de la demande: 31.05.2017
(73) Titulaire: Electricité de France, 75008 Paris (FR)
(72) Inventeur: STEVENS, Philippe, F-77940 Noisy Rudignon (FR); LHERMENAULT, Julien, F-75012 Paris (FR); TOUSSAINT, Gwenaëlle, F-77140 Nemours (FR)
(74) Mandataire: Cabinet Plasseraud
(86) Numéro de dépôt international: PCT/FR2015/052015
(87) Numéro de publication internationale: WO 2016/012717

(56) Documents cités:
- WO-A1-2014/009211
- FR-A1- 2 998 718

## Description

### DOMAINE TECHNIQUE

L'invention se rapporte au domaine du pilotage de la charge d'une batterie métal-air comprenant des cellules métal-air à trois électrodes.

### ARRIÈRE-PLAN TECHNOLOGIQUE

Les cellules de batteries métal-air utilisent une électrode négative à base d'un métal tel que le zinc, le fer ou le lithium, couplée à une électrode à air. L'électrolyte le plus souvent utilisé est un électrolyte aqueux alcalin.

Lors de la décharge d'une telle batterie, de l'oxygène est réduit à l'électrode positive et le métal est oxydé à l'électrode négative :
Décharge à l'électrode négative : M → Mⁿ⁺ + n e⁻
Décharge à l'électrode positive : O₂ + 2 H₂O + 4 e⁻ → 4 OH⁻

L'avantage des systèmes métal-air réside dans l'utilisation d'une électrode positive de capacité infinie, l'oxygène consommé à l'électrode positive n'ayant pas besoin d'être stocké dans l'électrode mais pouvant être prélevé dans l'air ambiant. Les générateurs électrochimiques de type métal-air sont donc connus pour leurs énergies massiques élevées, pouvant atteindre plusieurs centaines de Wh/kg.

Les électrodes à air sont par exemple utilisées dans des piles à combustible alcalines qui sont particulièrement avantageuses par rapport à d'autres systèmes en raison des cinétiques réactionnelles élevées au niveau des électrodes et en raison de l'absence de métaux nobles tels que le platine. On retrouve également des batteries métal-air par exemple dans des prothèses auditives.

Une électrode à air est une structure solide poreuse, généralement en grains de carbone, en contact avec l'électrolyte liquide. L'interface entre l'électrode à air et l'électrolyte liquide est une interface dite « à triple contact » où sont présents simultanément la matière solide active de l'électrode, l'oxydant gazeux, c'est-à-dire l'air, et l'électrolyte liquide. Une description des différents types d'électrodes à air pour batteries zinc-air est exposée par exemple dans l'article bibliographique de V. Neburchilov et al., intitulé « A review on air cathodes for zinc-air fuel cells », Journal of Power Sources 195 (2010) p. 1271-1291.

Lorsqu'une batterie métal-air doit être rechargée électriquement, le sens du courant est inversé. De l'oxygène est produit à l'électrode positive et le métal est redéposé par réduction à l'électrode négative :
Recharge à l'électrode négative : Mⁿ⁺ + n e⁻ → M
Recharge à l'électrode positive : 440OH⁻ → O₂ + 2H₂O + 4e⁻

Les batteries de type métal-air fonctionnent très bien en décharge, mais plusieurs problèmes lors de la recharge restent encore à résoudre.

L'utilisation d'une électrode à air en sens de recharge pour effectuer une réaction d'oxydation et dégagement d'oxygène présente de nombreux inconvénients. La structure poreuse de l'électrode à air est fragile. Il a été observé que cette structure était détruite mécaniquement par le dégagement de gaz quand elle était utilisée pour produire de l'oxygène par oxydation d'un électrolyte liquide. La pression hydraulique générée au sein de l'électrode par la production de gaz est suffisante pour provoquer une rupture des liaisons entre les grains de carbone constituant l'électrode à air.

La dégradation de l'électrode à air, quand elle est utilisée pour charger ou recharger la batterie métal-air, réduit fortement la durée de vie de la batterie. Il s'agit d'une des principales causes du faible développement commercial des accumulateurs métal-air rechargeables électriquement.

Un moyen de protéger l'électrode à air contre une dégradation consiste à utiliser une deuxième électrode positive dite deuxième électrode « de charge » qui est utilisée pour la réaction de dégagement d'oxygène.

L'électrode à air est alors découplée de l'électrode de charge et seule cette dernière est utilisée pendant la phase de charge. L'électrode à air reste alors inerte en phase de charge et conserve un potentiel fixe. Le brevet US 3 532 548 de Z. Starchurski décrit par exemple une batterie zinc-air avec une deuxième électrode auxiliaire utilisée pour la phase de charge.

D'autre part, certains problèmes peuvent également intervenir du côté de l'électrode négative lors de la recharge électrique d'une batterie métal-air, par exemple une batterie zinc-air.

Lors de la recharge, les ions métalliques Mⁿ⁺ sont réduits à l'électrode négative et se déposent sous leur forme métallique M dès que le potentiel au niveau de cette électrode est suffisamment négatif. Un dépôt uniforme et homogène du métal sur l'électrode est souhaité pour assurer une bonne tenue durant les cycles de charges et de décharges de cette électrode.

Or, il a été constaté que, dans certaines conditions, le métal se déposait sous forme de mousse peu adhérente à la surface de l'électrode, mousse qui pouvait ensuite se détacher de l'électrode provoquant une perte de matière active et par conséquent une perte de capacité de la batterie. Dans d'autres cas, il a été constaté que le métal pouvait également se déposer sous forme d'excroissances irrégulières appelées dendrites. Ces dendrites peuvent croître jusqu'à atteindre l'électrode positive pendant la charge, provoquant un court-circuit interne empêchant la recharge.

Pour tenter de résoudre ces problèmes, et produire un dépôt de zinc homogène lors de la phase de charge, la demande WO 2014 083268 A1 propose de maintenir le potentiel de l'électrode négative en-dessous d'un seuil critique. Ce potentiel est obtenu par une mesure de la tension entre l'électrode à air, à potentiel fixe lors de la charge, et l'électrode négative.

Le document FR-A-2 998 718 décrit un procédé de gestion de charge d'une batterie métal-air selon l'état de la technique. Les développements exposés ci-avant se rapportent à une seule cellule métal-air. Or les batteries se composent généralement d'une pluralité de cellules reliées entre-elles en série, parallèle ou dans une combinaison de connexions série et parallèle. La charge d'une telle batterie fait intervenir un unique chargeur alimentant la batterie en courant continu. Le chargeur est relié aux deux bornes de la batterie correspondant respectivement à l'électrode négative d'une cellule située à l'une des extrémités de la batterie et l'électrode positive de charge de la cellule située à l'autre extrémité de la batterie.

En chargeant une batterie de cellules connectées en série, le courant global circulant à travers la batterie demeure constant, même si les cellules ne sont pas individuellement dans le même état de charge. Les cellules peuvent également être à des tensions différentes. Le dégagement d'oxygène à l'anode d'une cellule métal-air provoque de fortes fluctuations dans la tension entre les deux électrodes de charge de la cellule. En effet, contrairement au cas d'une batterie fermée dans laquelle les électrodes positives et négatives peuvent toutes les deux se charger et sont donc toutes deux à des potentiels stables, l'électrode positive de charge d'une cellule métal-air n'est pas en équilibre avec la matière active, dans la mesure où il y a un dégagement d'oxygène vers l'extérieur.

Les fortes fluctuations de tension dans une cellule métal-air peuvent accentuer les inhomogénéités dans la manière dont le métal va se déposer sur les électrodes négatives des cellules d'une telle batterie.

Les dispositifs de pilotage de charge de batteries conventionnelles à deux électrodes permettent de distribuer le courant de charge dans les cellules d'une batterie afin d'assurer une charge complète de toutes les cellules. Ces dispositifs de pilotage de charge surveillent la tension aux bornes d'une cellule pour identifier un point de cette dernière sur une courbe de charge courant-tension préalablement obtenue. La charge est arrêtée lorsque la tension aux bornes de la cellule dépasse un point caractéristique de fin de charge. Ces dispositifs de pilotage de charge ne sont pas adaptés à une batterie de cellules métal-air dans lesquelles les fluctuations de tension rendent imprécises les données de l'état de charge d'une cellule, et où il est important de veiller à ne pas dépasser un potentiel seuil sur l'électrode négative comme exposé ci-avant.

Les contraintes exposées ci-dessus rendent très difficile le pilotage efficace d'une batterie constituée de cellules métal-air en vue d'augmenter le nombre de cycles de charges et décharges électriques de la batterie, et ainsi de conférer avantageusement à la batterie une plus grande durée de vie. Par conséquent, un procédé de pilotage de charge d'une batterie composée de cellules métal-air ainsi qu'un gestionnaire de charge pour une telle batterie sont recherchés.

### EXPOSE DE L'INVENTION

Pour répondre aux problèmes exposés ci-avant, la présente invention propose un procédé de gestion de charge d'une batterie métal-air comprenant au moins une cellule, la cellule comprenant au moins une électrode négative, une première électrode positive à air et une seconde électrode positive de dégagement d'oxygène, le procédé comportant, pour chaque cellule, pendant l'application d'un courant à la cellule, résultant, pendant la charge, en la circulation d'un courant de charge entre l'électrode négative et la seconde électrode positive de dégagement d'oxygène :
- comparer la valeur absolue d'un potentiel de l'électrode négative à une valeur seuil critique, le potentiel de l'électrode négative étant déterminé par rapport à la première électrode positive à air ;
- lorsque la valeur absolue du potentiel de l'électrode négative atteint la valeur seuil, dévier un excédent de courant de charge fonction de l'écart entre le courant appliqué à la cellule et le courant de charge.

L'invention propose un procédé de pilotage de charge d'une batterie métal-air adapté aux contraintes de ces cellules et utilisable avec des cellules comprenant une deuxième électrode de charge.

L'invention compare le potentiel de l'électrode négative de chaque cellule métal-air avec la tension consigne de référence de cette cellule. Cette approche se distingue de l'art antérieur dans lequel le paramètre surveillé pour déterminer l'état de charge d'une cellule de la batterie est la tension entre les électrodes de charge.

L'invention présente l'avantage de maintenir le potentiel de l'électrode négative en-dessous de la valeur seuil en toute circonstance. Cet effet est obtenu grâce à une déviation de la portion du courant de charge qui autrement ferait passer le potentiel de l'électrode négative au-dessus de la valeur seuil. Le courant appliqué à la cellule, issu de la batterie, emprunte alors deux voies parallèles : une partie du courant continue à alimenter la cellule et traverse l'électrolyte, tandis que la partie excédentaire est réorientée par exemple vers une au moins une autre cellule de la batterie. Selon la terminologie générale présentée précédemment, lorsque la valeur absolue du potentiel de l'électrode négative atteint la valeur seuil précitée, on dévie un excédent de courant de charge depuis l'électrode négative de cette cellule, cet excédent de courant de charge étant fonction de l'écart entre le courant appliqué à la cellule et le courant de charge.

L'utilisation du potentiel électrique de l'électrode négative, et non de la tension entre les électrodes de charge, en guise de paramètre de surveillance de l'état de charge de la batterie, permet de s'affranchir des contraintes d'instabilité de la tension des cellules métal-air à l'origine des difficultés de conception d'un système de régulation efficace pour des batteries utilisant de telles cellules.

Le potentiel de la première électrode positive à air est stable en phase de charge et peut donc constituer une électrode de référence pour mesurer le potentiel changeant de l'électrode négative. La tension entre l'électrode négative et la première électrode positive à air donne donc accès au potentiel de l'électrode négative. En mesurant le potentiel de l'électrode négative, l'invention s'affranchie des fortes fluctuations de potentiel survenant sur l'électrode positive de charge, dont l'origine est typiquement liée à la réaction de dégagement d'oxygène comme expliqué ci-avant. L'invention permet alors d'éviter une détérioration indésirable d'une cellule lors de la charge en maintenant le potentiel de l'électrode négative en-dessous d'une valeur seuil encore appelée valeur consigne.

Le potentiel de l'électrode négative mesuré dans la cellule n'est pas non plus dépendant des états des cellules voisines auxquelles la cellule est connectée. Le procédé de pilotage de charge selon l'invention n'est donc pas dépendant du nombre de cellules dans une batterie. Le procédé peut être mis en oeuvre pour chaque cellule indépendamment de l'état des cellules voisines.

Le procédé de pilotage de charge selon l'invention permet ainsi d'identifier avec précision le dépassement d'une valeur seuil critique du potentiel, et d'éviter la formation de mousses ou dendrites sur l'électrode négative de nature à détériorer une cellule et réduire la durée de vie d'une batterie.

Les dispositifs de pilotage de charge utilisés dans les batteries standard à deux électrodes présentent généralement l'inconvénient de fonctionner selon un régime de fonctionnement du type « tout ou rien ». En effet, la déviation du courant est généralement intégrale lorsque le gestionnaire de charge détermine que la cellule est rechargée en comparant la tension à ses bornes à une tension de consigne caractéristique de la fin de charge. En ne déviant que l'excédent de courant de charge qui produirait une élévation indue du potentiel de l'électrode négative, l'invention permet de continuer jusqu'à son terme la charge d'une cellule métal-air même lorsque le potentiel de l'électrode négative a atteint la valeur seuil.

Selon un mode de réalisation avantageux, l'excédent de courant de charge d'une cellule peut être dévié vers une cellule voisine ou vers un chargeur.

Le terme « cellule voisine » désigne le premier voisin de la cellule considérée. Une distribution de proche en proche du courant excédentaire s'avère être adaptée pour gérer la distribution du courant de charge dans une batterie contenant un grand nombre de cellules.

Typiquement, l'excédent de courant de charge d'une cellule peut être dévié vers une cellule voisine. L'excédent de courant de charge peut également être dévié vers un chargeur de la batterie, par exemple pour une cellule dont la seconde électrode positive de dégagement d'oxygène est reliée à la borne positive du chargeur de la batterie.

La déviation de l'excédent de courant de charge, apparaissant lorsque la valeur seuil critique du potentiel de l'électrode négative est atteinte, peut être utilisée dans une cellule voisine qui peut être dans un état de charge différent.

Avantageusement, pour chaque cellule, la valeur seuil critique peut être fixée en fonction du potentiel en début de charge.

Pendant la charge, il y a compétition sur l'électrode négative entre une réduction des ions zincate pour produire du zinc et réduction de l'eau pour produire de l'hydrogène. La probabilité que la deuxième réaction de production d'hydrogène se produise augmente à mesure que le potentiel de l'électrode négative augmente en devenant plus négatif. En plafonnant le potentiel de réduction en fonction d'un potentiel en début de charge, le risque de voir se produire une réaction de production d'hydrogène, dommageable pour la cellule, peut être réduit. Il est possible de fixer la valeur du potentiel seuil à ne pas dépasser sur l'électrode négative comme étant une valeur correspondant au potentiel de l'électrode négative en début de charge majoré, par exemple, de 10%.

Selon un mode de réalisation, la valeur seuil critique peut être réévaluée à intervalle de temps régulier.

Après typiquement une centaine de cycles de charge et décharge, la caractéristique courant-tension de charge d'une cellule de batterie métal-air peut, malgré toutes les précautions prises pour la préserver, évoluer. Par conséquent, il est judicieux d'en tenir compte en adaptant à intervalle de temps régulier la valeur du potentiel seuil par la méthode décrite ci-dessus. Une telle évaluation peut par exemple être effectuée après un nombre déterminé de cycles de charge et décharge, pour tenir compte de la dégradation progressive de la cellule.

Selon un mode particulier de réalisation, un circuit analogique comportant un composant d'impédance variable peut être prévu, la déviation de l'excédent de courant de charge étant mise en oeuvre par une modification d'impédance dudit composant.

Pour dévier l'excédent de courant de charge lorsque le potentiel de l'électrode négative atteint la valeur du potentiel seuil, l'utilisation d'un composant analogique dont l'impédance peut être modifiable en fonction de la tension lui étant appliquée, peut permettre de dévier le courant de charge excédentaire rapidement. Un tel mécanisme de déviation, pouvant par exemple reposer sur l'utilisation d'un transistor de puissance tel qu'un transistor Darlington, peut tout à fait convenir à des cellules métal-air.

Notamment, l'impédance du composant peut varier au moins en fonction d'une grandeur représentative d'une différence entre le potentiel de l'électrode négative et ladite valeur seuil, pour délivrer en sortie du composant ledit excédant de courant de charge.

L'utilisation d'une différence entre le potentiel de l'électrode négative et de la valeur seuil comme moyen de régulation de l'activation du composant analogique de déviation de l'excédent de courant de charge constitue un moyen adapté pour protéger la cellule d'une possible dégradation. Le courant appliqué à la cellule transite alors intégralement dans la cellule en début de charge lorsque le potentiel de l'électrode négative est inférieur à la valeur seuil, et une fois que la valeur seuil est atteinte, l'excédent de courant, égale à la différence entre le courant appliqué à la cellule et le courant traversant la cellule, est dévié vers une autre cellule.

Selon un mode de réalisation, la mesure du potentiel de l'électrode négative peut comprendre un filtrage de stabilisation de la tension entre l'électrode négative et la première électrode à air.

La dynamique de charge d'une cellule métal-air peut conduire à des mouvements des porteurs de charge dans l'électrolyte générant du bruit, rendant la mesure du potentiel de l'électrode négative d'une cellule sensible à ce bruit. Des variations du courant et de la tension peuvent avoir pour origine du bruit, et peuvent perturber la régulation de la charge d'une cellule métal-air. Le filtrage de la tension mesurée entre la cathode et l'électrode à air, par exemple en faisant intervenir un amplificateur opérationnel utilisé en montage différentiel, permet de couper les variations de tension haute fréquence. Ainsi, le potentiel mesuré de l'électrode négative peut ne pas être sujet à des fluctuations rapides susceptibles d'introduire un biais de régulation lors du pilotage de charge de la batterie.

L'invention se rapporte également à un gestionnaire de charge pour une cellule de batterie métal-air comprenant au moins une cellule, la cellule comprenant au moins une électrode négative, une première électrode positive à air et une seconde électrode positive de dégagement d'oxygène, le gestionnaire de charge comportant pour chaque cellule un circuit électronique agencé pour, pendant l'application d'un courant à la cellule, résultant, pendant la charge, en la circulation d'un courant de charge entre l'électrode négative et la seconde électrode positive de dégagement d'oxygène :
- comparer la valeur absolue d'un potentiel de l'électrode négative à une valeur seuil critique, le potentiel de l'électrode négative étant déterminé par rapport à la première électrode positive à air ;
- lorsque la valeur absolue du potentiel de l'électrode négative atteint la valeur seuil, dévier un excédent de courant de charge fonction de l'écart entre le courant appliqué à la cellule et le courant de charge.

Les éléments constitutifs d'un tel gestionnaire de charge permettent de mettre efficacement en oeuvre le procédé décrit ci-avant. En particulier, en utilisant non pas une tension entre les deux électrodes de charge, mais le potentiel de l'électrode négative, pour comparer ce potentiel avec une valeur seuil critique, l'invention protège efficacement une cellule des dégradations pouvant être provoquées par des potentiels élevés sur l'électrode négative. L'invention résout ainsi le problème apparaissant dans les cellules métal-air de fluctuations importantes de la tension entre électrodes de charge comme expliqué ci-avant.

Le circuit électronique pilote la charge de la cellule en déviant l'excédent de courant de charge correspondant au courant qui aurait pour effet d'augmenter le potentiel de l'électrode au-dessus de la valeur seuil. La déviation du courant de charge excédentaire intervient de manière effective lorsque le potentiel de l'électrode négative atteint la valeur seuil.

Le gestionnaire de charge de l'invention permet ainsi de contrôler l'état de charge de chaque cellule en les préservant et garantissant une durée de vie élevée, indépendamment de l'état de charge et/ou du potentiel des autres cellules de la batterie.

Notamment, le circuit analogique peut dévier l'excédent de courant de charge vers une cellule voisine ou un chargeur, via une connexion à ladite cellule voisine ou au chargeur, respectivement.

Selon un mode de réalisation, le circuit analogique de déviation de l'excédent de courant de charge peut comprendre un composant d'impédance variable, la déviation de l'excédent de courant de charge étant mise en oeuvre par une modification d'impédance dudit composant.

Notamment, le composant d'impédance variable est un transistor de puissance.

L'utilisation d'un transistor de puissance offre une grande réactivité dans la déviation d'un excédent de courant. D'autre part, un tel composant analogique peut être piloté avec de faibles énergies pour dévier de fortes intensités de l'ordre de 3 ampères en quelques centaines de microsecondes.

Notamment, le transistor de puissance peut être un transistor Darlington.

Le transistor Darlington peut s'avérer être un composant adapté à la déviation de forts courants de quelques ampères à partir d'une commande nécessitant de faibles courants de quelques mA. Il peut également répondre aux exigences de réactivité dans la déviation du courant de cellules métal-air, lorsque le potentiel de l'électrode négative se rapproche de la valeur potentiel seuil et plus particulièrement lorsque ce potentiel atteint la valeur seuil.

Selon un mode de réalisation, le gestionnaire de charge peut comprendre en outre un circuit électronique de mesure de la différence de potentiel entre l'électrode négative et la première électrode positive à air.

Selon un mode de réalisation, le circuit électronique de mesure peut comprendre un filtre stabilisateur de tension.

La dynamique de charge d'une cellule métal-air peut conduire à des mouvements des porteurs de charge dans l'électrolyte s'apparentant à du bruit et rendant la mesure du potentiel de l'électrode négative d'une cellule sensible à ce bruit. Il peut notamment s'agir de fluctuations rapides, supérieures typiquement à 75 HZ, de la tension aux bornes des électrodes de charge. En guise de réducteur de bruit, l'invention peut ainsi par exemple utiliser une mesure à base d'amplificateur différentiel employant un amplificateur opérationnel se comportant comme un filtre passe-bas. De cette manière, la mesure du potentiel de l'électrode négative n'est pas polluée par des biais liés à un bruit haute fréquence, c'est-à-dire dans ce contexte des fréquences supérieures typiquement à 75 Hz.

L'invention se rapporte également à une batterie comprenant au moins une cellule, chaque cellule comprenant au moins une électrode négative, une première électrode positive à air, une seconde électrode positive de dégagement d'oxygène et un gestionnaire de charge tel que décrit ci-avant.

### DESCRIPTIF DES FIGURES

Le procédé objet de l'invention sera mieux compris à la lecture de la description qui suit d'exemples de réalisations présentés à titre illustratif, aucunement limitatifs, et à l'observation des dessins ci-après sur lesquels :
- la figure 1 est une représentation schématique d'une cellule métal-air à trois électrodes ; et
- la figure 2 est une représentation schématique d'une batterie constituée de trois cellules métal-air reliées en série et comprenant un organe de déviation d'excédent de courant de charge; et
- la figure 3 est une représentation schématique d'un gestionnaire de charge pour cellule métal-air à trois électrodes; et
- la figure 4 est un schéma électronique d'un circuit de mesure du potentiel de l'électrode négative d'une cellule métal-air; et
- les figures 5a et 5b sont des schémas électroniques d'un circuit permettant d'estimer un écart correspondant à la différence entre un potentiel seuil de consigne et le potentiel mesuré de l'électrode négative; et
- la figure 6 est un schéma électronique d'un circuit permettant d'ajuster l'écart mesurée d'après les schémas des figures 5a et 5b ; et
- la figure 7 est un schéma électronique d'un circuit permettant d'obtenir une tension de pilotage d'un composant à impédance variable déviant l'excédent de courant de charge ; et
- la figure 8 est un schéma électronique d'un circuit permettant de commander l'activation d'un transistor Darlington déviant l'excédent de courant de charge vers une cellule voisine.

Pour des raisons de clarté, les dimensions des différents éléments représentés sur ces figures ne sont pas nécessairement en proportion avec leurs dimensions réelles. Sur les figures, des références identiques correspondent à des éléments identiques.

### DESCRIPTION DÉTAILLÉE

L'invention se rapporte à la charge d'une batterie composée de cellules métal-air reliées en série, parallèle ou combinant des connexions série et parallèle.

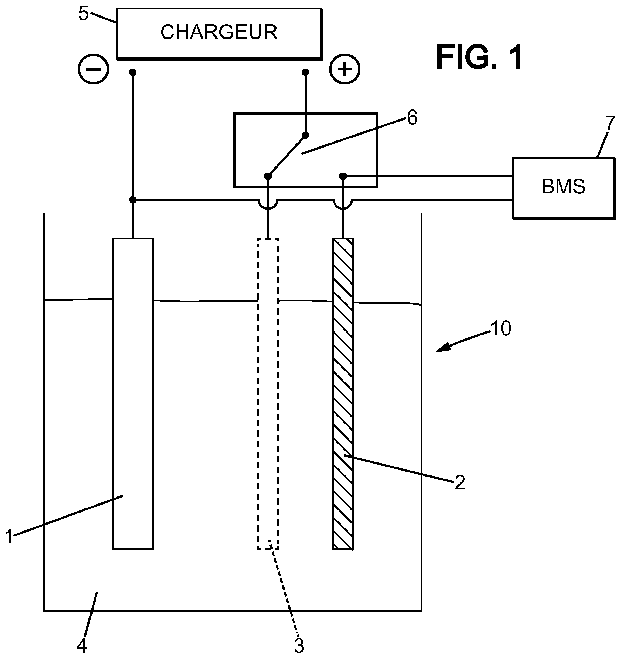

Les cellules métal-air les plus abouties et efficaces en termes de durée de vie sont les cellules à trois électrodes telles que celle représentée sur la figure 1. La figure 1 illustre schématiquement une batterie constituée d'une seule cellule métal-air 10. Une telle cellule 10 comprend un électrolyte 4 typiquement formé à partir d'une solution alcaline. L'électrode négative 1, typiquement en métal tel que le zinc le fer ou le lithium, est reliée à une borne négative d'un chargeur 5. Une première électrode positive à air 2 est utilisée dans le circuit de puissance en cours de décharge. En cours de charge, cette première électrode positive à air 2 n'est utilisée qu'à des fins de mesure du potentiel de l'électrode négative 1. Le mode de fonctionnement en charge ou décharge peut être sélectionné à l'aide d'un moyen de bascule 6 tel qu'un relais. Une deuxième électrode positive de dégagement d'oxygène 3 est utilisée uniquement lors de la charge de la batterie. L'ensemble de la cellule est piloté en charge à l'aide d'un gestionnaire de charge 7 appelé « Battery Management System » ou BMS selon la terminologie anglo-saxonne.

Du fait des fortes fluctuations de tension survenant entre les bornes de charge 1 et 3, les gestionnaires de charge utilisés dans les batteries conventionnelles à deux électrodes ne sont pas adaptées aux batteries comprenant des cellules de type métal-air. Il est par ailleurs avantageux de maintenir le potentiel de l'électrode négative en-dessous d'une valeur seuil pour éviter la formation de dendrites ou de mousses lors du dépôt des ions métalliques sur l'électrode en phase de recharge.

Lorsqu'une batterie comprenant plusieurs cellules est rechargée, un courant continu délivré par le chargeur 5 traverse l'intégralité des cellules de la batterie sans tenir compte du potentiel de chaque cellule. Les cinétiques de charge pouvant varier d'une cellule à l'autre, de fortes disparités dans le potentiel des électrodes négatives de chaque cellule peuvent donc survenir au cours de la charge d'une batterie et la valeur seuil critique du potentiel peut être dépassée dans certaines cellules, contribuant à dégrader la batterie.

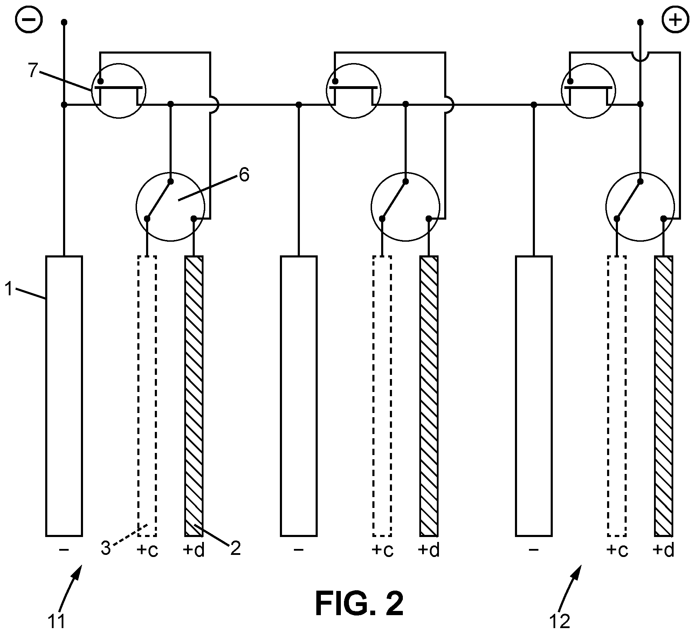

La figure 2 illustre schématiquement une batterie comprenant trois cellules métal-air reliées en série, et équipées chacune d'un gestionnaire de charge 7 selon l'invention. Le courant de charge délivré par un chargeur circule entre la borne négative reliée à l'électrode négative 1 d'une cellule 11 située à l'extrémité de la batterie et la borne positive de la deuxième électrode de dégagement d'oxygène 3 d'une cellule 12 située à l'autre extrémité de la batterie. L'invention associe à chaque cellule de la batterie un gestionnaire de charge 7 apte à recevoir une mesure de la valeur du potentiel de l'électrode négative 1 de la cellule, comparer cette valeur à une valeur seuil correspondant à une valeur consigne à ne pas dépasser, et actionner un organe de déviation de l'excédent de courant de charge lorsque la valeur seuil est atteinte.

L'excédent de courant de charge peut être défini comme étant un courant égal à la différence entre le courant appliqué à la cellule, aussi appelé courant d'entrée de la cellule, et le courant traversant effectivement la cellule via l'électrolyte en passant de l'électrode négative à la deuxième électrode positive de dégagement d'oxygène.

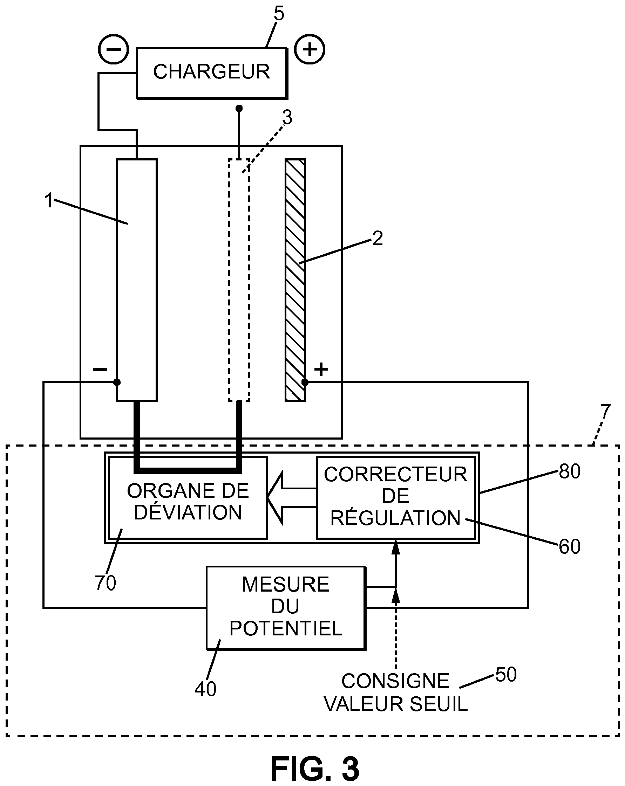

La figure 3 illustre schématiquement les composants principaux pouvant être compris dans un gestionnaire de charge 7 selon l'invention. Pour des raisons de clarté, cette figure illustre une seule cellule alimentée par un chargeur 5.

Le gestionnaire de charge 7 comprend un circuit électronique 40 permettant de mesurer le potentiel de l'électrode négative 1 à travers une mesure de la différence de potentiel entre la première électrode positive à air 2 et l'électrode négative 1. La valeur mesurée par le circuit 40 peut être transmise à un circuit électronique de régulation 80. Ce circuit 80 peut également recevoir une valeur seuil consigne 50 qui peut être une valeur fixe ou bien une valeur réévaluée au bout d'un nombre déterminé de cycles de charge et décharge. Le circuit 80 peut comprendre un premier bloc électronique agissant comme un correcteur de régulation 60 qui compare les valeurs du potentiel mesuré à la valeur seuil consigne 50 en vue de piloter un second bloc électronique formant un organe de déviation 70 de courant de charge.

Le gestionnaire de charge 7 de l'invention se distingue en outre des dispositifs de pilotage de charge de l'art antérieur en ce qu'il propose un pilotage analogique de la déviation de l'excédent de courant de charge et non un pilotage logique. Ainsi, la quantité de courant de charge déviée peut être telle qu'une partie du courant peut encore traverser la cellule lorsque le potentiel de l'électrode négative atteint la valeur consigne 50. La déviation peut cependant n'être réellement effective que lorsque la valeur seuil est atteinte.

Il convient de remarquer que la charge d'une cellule est un processus non-linéaire. Ainsi, au début d'un cycle de charge, le courant traversant la cellule peut être élevé et le potentiel de l'électrode négative 1 inférieur à la valeur seuil 50. À mesure que les ions métalliques se réduisent sur l'électrode négative 1, le potentiel de l'électrode négative 1 augmente. Cependant, le chargeur alimente avec un courant constant les cellules. Ainsi, l'invention permet de maintenir un courant constant dans la cellule dans une première phase de charge de la batterie tout en maintenant le potentiel de l'électrode négative inférieur au seuil 50. Lorsque le potentiel de l'électrode négative 1 atteint la valeur seuil, le courant excédentaire est dévié vers une autre cellule. La portion de courant restante permet de terminer la charge de la batterie sans endommager la cellule. Il est courant de mettre fin à la charge d'une batterie lorsqu'une certaine quantité de courant a été délivrée à la batterie. L'invention permettant de redistribuer au sein même de la batterie le courant de charge excédentaire vers les cellules qui peuvent encore utiliser tout ou partie du courant du chargeur 5, il est possible de fixer la fin de charge en fonction du courant total délivré par le chargeur, à partir d'une valeur prédéterminée comme correspondant à une quantité de courant permettant de charger complètement toutes les cellules de la batterie.

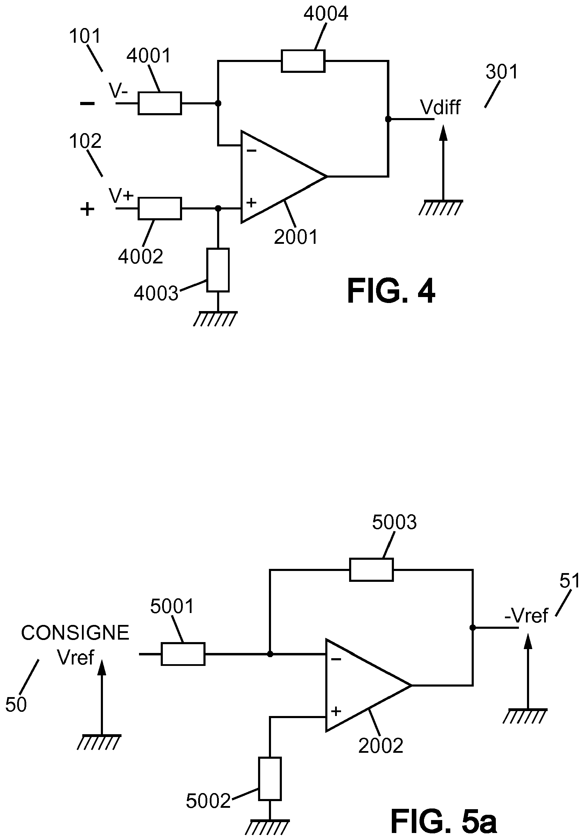

Les figures 4 à 8 illustrent sur des circuits électroniques un exemple de réalisation particulier pour les composants 40, 80, 60 et 70 décrits ci-avant. Des variantes de réalisation s'appuyant sur d'autres moyens techniques permettant de remplir les fonctions de mesure, comparaison d'un potentiel à une valeur consigne et de pilotage d'un organe de déviation peuvent être utilisées pour réaliser le procédé de pilotage de charge décrit ci-avant.

La figure 4 représente un exemple de circuit électronique de mesure du potentiel 40 de l'électrode négative 1. Ce circuit 40 se compose d'un amplificateur différentiel 2001 pouvant être sélectionné pour être opérationnel dans des gammes de tension comprises généralement entre 0 V et 6 V. La valeur de cette gamme de tension dépend généralement du nombre de cellules qui composent la batterie. La borne négative de l'amplificateur 2001 peut être reliée à l'électrode négative 1 via une résistance 4001. Le potentiel 101 de cette électrode est noté V-. La borne positive peut être reliée à la deuxième électrode positive de dégagement d'oxygène 2 via une résistance 4002. Une résistance 4003 reliée à la masse peut être interposée entre la résistance 4002 et l'amplificateur 2001. Le potentiel 102 de cette électrode est noté V+. L'amplificateur peut comprendre une résistance de contre-réaction 4004. En sortie du circuit 40, une tension 301 noté Vdiff, correspondant au potentiel de l'électrode négative 1, peut être obtenue.

L'utilisation d'un amplificateur opérationnel pour mesurer une tension peut s'avérer particulièrement avantageux dans le cadre d'une cellule métal-air étant donné les faibles tensions et courants mis en jeux. En effet, l'utilisation d'un amplificateur opérationnel peut permettre d'effectuer une mesure qui perturbe très peu l'état électrique des électrodes de mesure 1 et 2. Par ailleurs, l'amplificateur opérationnel peut agir comme un filtre passe-bas, ce qui permet de s'affranchir d'oscillations de tension susceptibles d'introduire un biais dans la régulation. En guise d'alternative, l'utilisation d'un filtre passe-bas en amont ou en aval du montage de mesure du potentiel peut être envisagée.

Selon un mode particulier de réalisation, les résistances 4001-4004 peuvent être choisies égales à 2,2 kOhms et l'amplificateur opérationnel peut être choisi comme étant un amplificateur LT1001A®. Ce type de montage présente la particularité de permettre des courants sur la ligne liée à V- de 1,4 mA, dissipant des puissances de 4,2 mW et des courants sur la ligne liée à V+ de 0,7 mA dissipant des puissances de 1,1 mW. Ces valeurs peuvent être sujettes à de faibles variations du fait des interconnexions des différents circuits des figures 4 à 8.

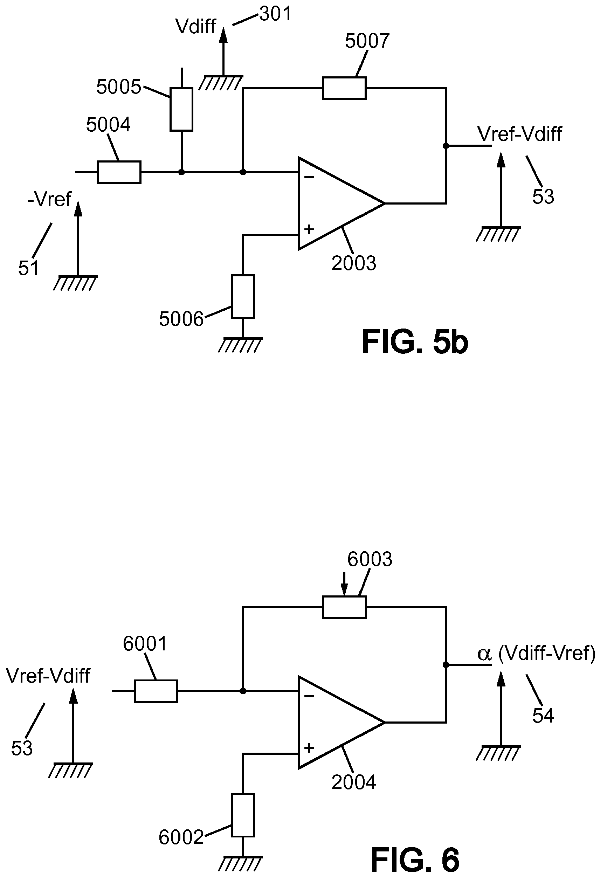

La tension 301 peut ensuite être acheminée vers le correcteur de régulation 60 pour être comparée à une valeur consigne comme indiqué sur la figure 5b.

Les figures 5a, 5b et 6 présentent un circuit électronique à titre d'exemple de réalisation du correcteur de régulation 60 de la figure 3.

La figure 5a propose un montage amplificateur inverseur pour changer le signe de la tension 50 correspondant à la valeur seuil Vref. Ce montage comprend un amplificateur opérationnel 2002 dont la borne positive peut être reliée à la masse via une résistance 5002. La borne négative peut être reliée à la tension de consigne 50 via une résistance 5001. Une résistance de contre-réaction 5003 peut également être prévue.

Les résistances 5001-5003 peuvent par exemple avoir pour valeur 2,2 kOhms. L'amplificateur 2002 peut avoir les mêmes caractéristiques que l'amplificateur 2001. Ainsi, le montage de la figure 5a peut être adapté pour inverser une tension d'entrée 50 comprise entre 1,3 V et 1,7 V. La valeur absolue de la tension de sortie 51 de l'amplificateur inverseur peut également être comprise entre 1,3 V et 1,7 V. Le courant maximal sur la ligne comprenant l'entrée Vref peut être de 0,8 mA. La puissance dissipée dans chaque résistance peut être de 1,4 mW.

La sortie 51 du montage de la figure 5a est utilisée comme entrée dans le montage sommateur-inverseur de la figure 5b.

Le montage sommateur-inverseur de la figure 5b peut être prévu pour calculer une différence entre la valeur consigne 50 et la tension 301 représentative du potentiel de l'électrode négative 1. La borne négative de l'amplificateur sommateur-inverseur 2003 peut être reliée via une résistance 5004 à une ligne portée à la tension 51. Elle peut également être reliée via la résistance 5005 à une ligne portée à la tension 301. La borne positive de l'amplificateur 2003 peut être reliée à la masse via une résistance 5006 et l'amplificateur 2003 peut posséder une résistance de contre-réaction 5007. L'amplificateur 2003 peut délivrer en sortie une tension 53 notée Vref-Vdiff correspondant à l'écart entre la valeur consigne 50 et le potentiel de l'électrode négative 1 donné par la tension 301.

Selon un mode spécifique de réalisation, les résistances 5004-5007 peuvent avoir une valeur de 2,2 kOhms et l'amplificateur 2003 peut être identique aux amplificateurs 2001 et 2002. La tension de sortie 53 peut varier entre -1.7 V et 1.3 V. Le courant maximal sur la ligne portée à la tension 301 peut être de 1,4 mA, le courant maximal sur la ligne portée à la tension 51 peut être de 0,8 mA et le courant maximal en sortie peut être de 0,8 mA. La sortie 53 étant reliée au montage amplificateur inverseur de la figure 6 possédant typiquement une résistance sur la ligne d'entrée élevée, il est possible d'estimer avec plus de précision les courants maximaux et les puissances dissipées par le montage de la figure 5b. Le courant maximal sur la ligne portée à la tension 301 peut être de 2,1 mA, le courant maximal sur la ligne portée à la tension 51 peut être de 1,6 mA. La puissance dissipée dans ce montage peut être de 26 mW.

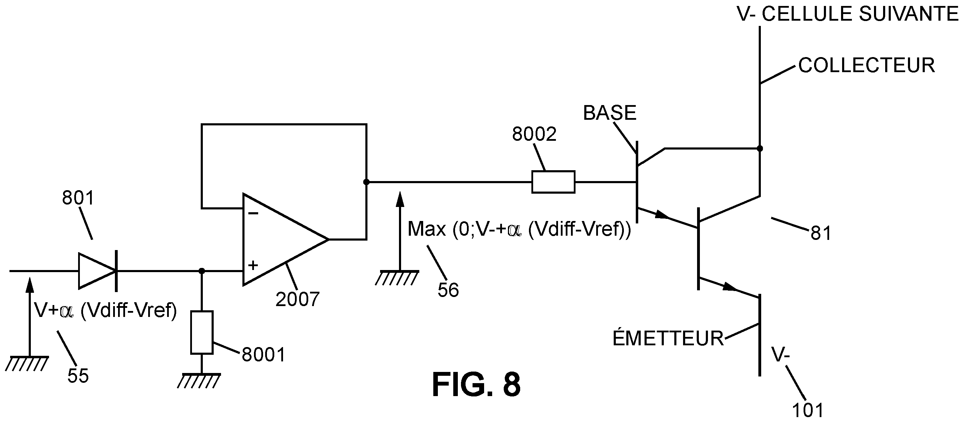

Le montage de la figure 6 correspond à un montage amplificateur inverseur permettant d'amplifier la différence de tensions 53 afin de construire une tension de commande de l'organe de déviation de l'excédent de courant de charge. Le montage de la figure 6 permet d'introduire un gain sur l'écart 53. Ce gain permet d'ajuster la valeur de l'écart entre le potentiel sur l'électrode négative et la valeur consigne 50 au-delà duquel un composant à impédance variable 81, représenté sur la figure 8, commence à dévier une partie du courant appliqué à la cellule. Il est ainsi possible de choisir un gain tel, que le composant 81 à impédance variable, décrit ci-après, peut être apte à dévier une faible portion du courant appliqué à la cellule même lorsque le potentiel de l'électrode négative n'atteint pas la valeur consigne 50.

La borne négative de l'amplificateur 2004 peut être reliée via une résistance 6001 à une ligne portée à la tension 53. La borne positive peut être reliée à la masse via une résistance 6002. Un potentiomètre 6003 de résistance typiquement réglable entre 10 kOhms et 300 kOhms peut faire office de résistance de contre-réaction. Le gain de l'amplificateur inverseur peut donc être ajustable. Les courants en entrée sur les bornes positive et négative de l'amplificateur 2004 peuvent typiquement être négligeables du fait de la valeur élevée de la résistance de contre-réaction. Le montage de la figure 6 peut délivrer en sortie une tension de commande 54 correspondant à la tension 53 multipliée par un gain alpha. Ce gain s'exprime en fonction des résistances R6003 et R6001 comme étant égal à -R6003/R6001. L'amplificateur 2004 peut être identique aux amplificateurs 2001-2003, la résistance 6001 peut avoir une valeur de 1 kOhm et la résistance 6002 peut avoir une valeur de 2,2 kOhms.

L'utilisation d'un potentiomètre en guise de composant de contre-réaction permet d'adapter le gain aux spécificités de chaque cellule comme énoncé ci-avant. La résistance du potentiomètre peut être réglée par étalonnage une fois avant utilisation ou bien étalonnée de nouveau au bout d'un nombre déterminé de cycles de charge et décharge.

Pour stabiliser la tension d'entrée 53, il est possible d'ajouter un filtre passe-bas en amont de la résistance 6001, par exemple un filtre passe-bas ayant une fréquence de coupure à 75 Hz. Un tel filtre permet de limiter des oscillations de tension qui auraient autrement pour conséquence d'alterner indûment le déclenchement et l'arrêt de la déviation d'un courant excédentaire au niveau du composant à impédance variable représenté sur la figure 8.

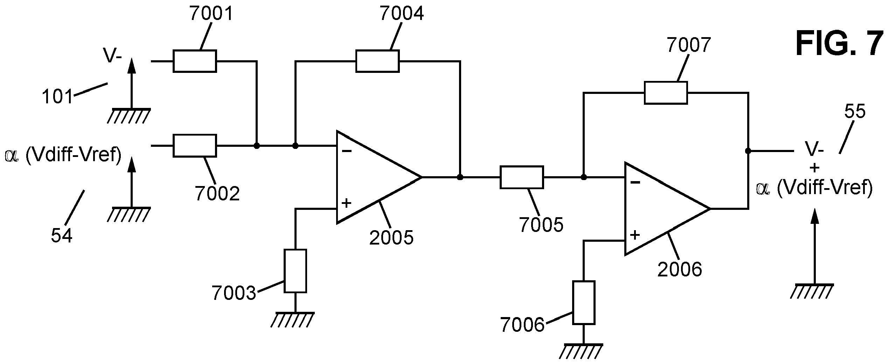

L'organe de déviation de courant 70 peut comprendre un circuit pour générer une tension de commande d'un composant à impédance variable tel qu'un transistor de puissance décrit ci-après. La figure 7 présente un montage dans lequel la tension de commande 54 est ajoutée au potentiel de l'électrode négative 101 en vue de générer une telle tension de commande. Ce montage se compose d'un amplificateur sommateur-inverseur 2005 suivi en série d'un amplificateur inverseur 2006. La borne négative de l'amplificateur 2005 peut être reliée d'une part à une ligne portée à la tension 54 via une résistance 7002 et d'autre part à une ligne portée à la tension 101 via une résistance 7001. La borne positive peut être reliée à la masse via une résistance 7003. Une résistance de contre-réaction 7004 peut être prévue.

La sortie de l'amplificateur 2005 peut être reliée via une résistance 7005 à la borne négative de l'amplificateur 2006. La borne positive de l'amplificateur 2006 peut être reliée à la masse via une résistance 7006. Une résistance de contre-réaction 7007 peut être prévue. En sortie de l'amplificateur 2006, le montage peut délivrer une tension 55 correspondant à la somme de la tension 101 et de la tension 54.

Selon un mode de réalisation particulier, les résistances 7001-7007 peuvent avoir une valeur de 2,2 kOhms. Les amplificateurs 2005 et 2006 peuvent être identiques aux amplificateurs 2001-2004.

La tension 54 peut varier entre -15 V et +15 V lorsque les amplificateurs peuvent fonctionner en rail à rail, la tension 101 peut typiquement varier entre 0 et 3 V. Ainsi, la valeur maximale de la tension 55 peut donc être de 15 V et la tension minimale de -15 V lorsque les amplificateurs peuvent fonctionner en rail à rail, l'amplificateur 2005 fonctionnant dans ces gammes extrêmes à la limite du régime de saturation.

Comme il sera présenté en relation avec la figure 8, une diode peut être prévue en sortie de la ligne portée à la tension 55 et en amont du montage suiveur de la figure 8. La diode bloquant le passage des courants pour des tensions appliquées négatives, il est possible d'estimer le courant en sortie de l'amplificateur inverseur 2006. Le courant maximal en sortie de 2006 peut être de 7 mA. Avec une tension sur la borne inverseur voisine de 1 V, la puissance dissipée dans l'amplificateur 2006 peut être de 7 mW. Pour un courant sur la ligne comprenant la résistance 7002 de 7 mA et un courant sur la ligne comprenant la résistance 7001 de 0,9 mA, sachant que la contre-réaction de l'amplificateur 2006 peut rajouter un courant de 7 mA, le courant maximal en sortie de 2005 peut être de 15 mA.

La puissance dissipée dans un amplificateur 2005 rail à rail peut être de 15 mW.

À partir de ces informations, nous pouvons estimer la puissance dissipée dans l'amplificateur 2004 à 7 mW en fonctionnement saturé. La puissance maximale dissipée dans l'amplificateur 2004 peut être de 30 mW, la puissance maximale dissipée dans l'amplificateur 2005 peut être de 60 mW et la puissance maximale dissipée dans l'amplificateur 2006 peut être de 30 mW.

La figure 8 illustre un montage suiveur permettant de créer une tension de pilotage d'un composant à impédance variable décrit ci-après. Ce montage comprend une diode 801 permettant de redresser le signal de commande 55 et protéger le composant à impédance variable. Une diode du type 1N914 peut par exemple être utilisée.

L'amplificateur 2007 peut avantageusement différer des amplificateurs 2001-2006 en ce qu'il n'est alimenté que par une tension + 15 V, l'autre borne d'alimentation étant à la masse, pour ne pas alimenter en inverse le composant à impédance variable 81. Un amplificateur du type LT1006 peut par exemple être utilisé. La borne positive de l'amplificateur 2007 peut comprendre une connexion à la masse via une résistance 8001. Le courant maximal dans la diode 801 peut être de 0.2 mA, pour une puissance dissipée de 0,12 mW. La puissance dissipée dans la résistance 8001 peut être de 4 mW, lorsque la valeur de cette résistance est de 100 kOhms. L'amplificateur 2007 peut délivrer en sortie une tension 56 redressée. Cet amplificateur 2007 permet ainsi typiquement de faire passer un courant faible dans la diode 801. En l'absence de cet amplificateur 2007, le dimensionnement de la diode 801 peut jouer un rôle dans la délivrance d'un courant suffisant pour commander le transistor Darlington.

Les caractéristiques du courant maximal en sortie de l'amplificateur 2007 sont fonction des besoins de commande du composant à impédance variable 81 déviant l'excédent de courant de charge. Le composant à impédance variable 81 de la figure 8, qui peut par exemple être un transistor de puissance tel un transistor Darlington, peut avantageusement être prévu pour assurer la déviation d'un courant au moins égal à 3 A. En considérant un gain minimal de 100 pour le transistor Darlington 81 de la figure 8, le courant de commande en sortie de l'amplificateur inverseur 2007 peut être prévu égal à 30 mA. La tension à l'état haut étant considérée à 13 V, la résistance de commande du transistor Darlington peut être de 400 Ohms environ. La puissance maximale dissipée dans l'amplificateur 2007 peut alors être de 150 mW.

Le transistor Darlington 81 de la figure 8 peut être relié à la ligne portée à la tension de commande 56 via une résistance 8002. Cette tension de commande peut alimenter la base du premier transistor du dispositif à impédance variable Darlington. L'émetteur du second transistor du dispositif à impédance variable Darlington peut être relié à l'électrode négative 1, portée au potentiel 101, de la cellule courante considérée. Le collecteur commun au premier et second transistor du dispositif à impédance variable Darlington 81 peut être relié à l'électrode négative de la cellule suivante de la batterie.

La résistance 8002 peut par exemple être choisie égale à 1 kOhms. Le choix de la valeur de cette résistance permet de régler la tension de commande du transistor Darlington. La réponse du transistor Darlington peut ainsi être ajustée par le choix du gain dans l'amplificateur-inverseur de la figure 6, à l'aide du potentiomètre 6003, et également par le choix de la résistance 8002.

La base du transistor Darlington permet de faire passer un excédent de courant de charge de l'électrode négative de la cellule courante à l'électrode négative de la cellule suivante dans la batterie lorsque la tension appliquée à la base est suffisante pour rendre passant le transistor Darlington. Dans la pratique, la construction du circuit de régulation décrit ci-avant est telle que le transistor Darlington devient passant lorsque le potentiel de l'électrode négative atteint le potentiel seuil 50, ou du moins s'en rapproche, sans toutefois autoriser un dépassement de la valeur seuil 50. Dans ce cas, le courant appliqué à la cellule considérée peut emprunter deux trajets distincts : une portion du courant peut circuler à travers l'électrolyte entre les deux électrodes de charge, et la partie restante peut transiter par le transistor Darlington 81.

Le courant dévié de la cellule par le transistor Darlington 81 peut être tel que seule la portion du courant appliquée à la cellule permettant de maintenir le potentiel de l'électrode négative 1 à une valeur inférieure ou égale au seuil est autorisée à transiter à travers l'électrolyte entre les deux électrodes de charge. Ainsi, le transistor Darlington 81 agit comme un composant analogique à impédance variable, cette variation étant contrôlée par la tension de commande 56 alimentant la base du transistor Darlington 81. La réponse du composant Darlington 81 étant généralement exponentielle du fait du gain élevé obtenu à l'état passant, le passage d'un courant susceptible d'augmenter le potentiel de l'électrode négative 1 au-delà de la valeur seuil 50 est empêché. La tension de commande 56 est fonction de l'écart entre le potentiel de l'électrode négative 1 et la valeur seuil 50. Cette régulation peut alors permettre d'adapter l'impédance du transistor Darlington de manière corrélée à l'écart entre le potentiel 101 de l'électrode négative 1.

Le système de régulation de la charge d'une batterie décrit ci-avant peut offrir une réactivité de quelques centaines de microsecondes, notamment en raison des temps de réponse des amplificateurs opérationnels utilisés, estimés à 40 microsecondes. Le composant à impédance variable Darlington 81 possède typiquement une dynamique de réponse rapide, d'une dizaine de nanoseconde. Il peut permettre de dévier jusqu'à 5 A de courant avec une alimentation sur la base du premier transistor de 5 mA seulement.

En outre, l'invention n'est pas limitée aux modes de réalisation particuliers présentés ci-avant à titre d'exemple.

Il est par exemple envisageable de dévier l'excédent de courant de charge ailleurs que vers une cellule voisine. Le courant de charge dévié peut par exemple servir à alimenter un accumulateur.

L'invention peut être mise en oeuvre aussi bien sur une batterie comprenant une seule cellule métal-air qu'une batterie comprenant une pluralité de cellules métal-air reliées électriquement entre elles.

Le choix des composants : résistances, amplificateurs, ne sont donnés qu'à titre d'exemple de réalisation pour illustrer notamment que l'invention peut fonctionner avec de faibles apports d'énergie pour réguler avec une réactivité élevée des courants de forte intensité.

## Revendications

1. Procédé de gestion de charge d'une batterie métal-air comprenant au moins une cellule (10, 11, 12), la cellule comprenant au moins une électrode négative (1), une première électrode positive à air (2) et une seconde électrode positive de dégagement d'oxygène (3), le procédé comportant, pour chaque cellule, pendant l'application d'un courant à la cellule, résultant, pendant la charge, en la circulation d'un courant de charge entre l'électrode négative (1) et la seconde électrode positive de dégagement d'oxygène (3) :
- comparer la valeur absolue d'un potentiel (301) de l'électrode négative (1) à une valeur seuil critique (50), le potentiel de l'électrode négative (1) étant déterminé par rapport à la première électrode positive à air (2) **caractérisé en ce que** :
- lorsque la valeur absolue du potentiel (301) de l'électrode négative (1) atteint la valeur seuil, dévier un excédent de courant de charge fonction de l'écart entre le courant appliqué à la cellule et le courant de charge.

2. Procédé selon la revendication 1, **caractérisé en ce que** l'excédent de courant de charge d'une cellule est dévié vers une cellule voisine ou vers un chargeur (5).

3. Procédé selon l'une des revendications précédentes, **caractérisé en ce que**, pour chaque cellule, la valeur seuil critique (50) est fixée en fonction du potentiel de l'électrode négative en début de charge.

4. Procédé selon l'une des revendications précédentes, **caractérisé en ce que** la valeur seuil critique (50) est réévaluée à intervalle de temps régulier.

5. Procédé selon l'une des revendications précédentes, **caractérisé en ce qu'**un circuit analogique (80) comportant un composant d'impédance variable (81) est prévu, la déviation de l'excédent de courant de charge étant mise en oeuvre par une modification d'impédance dudit composant (81).

6. Procédé selon la revendication 5, **caractérisé en ce que** l'impédance du composant (81) varie au moins en fonction d'une grandeur représentative d'une différence entre le potentiel de l'électrode négative et ladite valeur seuil, pour délivrer en sortie du composant (81) ledit excédant de courant de charge.

7. Procédé selon l'une des revendications précédentes, **caractérisé en ce que** la mesure du potentiel de l'électrode négative (1) comprend un filtrage de stabilisation de la tension entre l'électrode négative (1) et la première électrode à air (2).

8. Gestionnaire de charge (7) pour une cellule (10, 11, 12) de batterie métal-air comprenant au moins une cellule, la cellule comprenant au moins une électrode négative (1), une première électrode positive à air (2) et une seconde électrode positive de dégagement d'oxygène (3), le gestionnaire de charge (7) comportant pour chaque cellule un circuit électronique (80) agencé pour, pendant l'application d'un courant à la cellule, résultant, pendant la charge, en la circulation d'un courant de charge entre l'électrode négative (1) et la seconde électrode positive de dégagement d'oxygène (3) :
- comparer la valeur absolue d'un potentiel (301) de l'électrode négative (1) à une valeur seuil critique (50), le potentiel de l'électrode négative (1) étant déterminé par rapport à la première électrode positive à air (2) **caractérisé en ce que** :
- lorsque la valeur absolue du potentiel (301) de l'électrode négative (1) atteint la valeur seuil (50), dévier un excédent de courant de charge fonction de l'écart entre le courant appliqué à la cellule et le courant de charge.

9. Gestionnaire de charge (7) selon la revendication 8, **caractérisé en ce que** le circuit analogique (80) dévie l'excédent de courant de charge vers une cellule voisine ou un chargeur (5) via une connexion à ladite cellule voisine ou au chargeur (5), respectivement.

10. Gestionnaire de charge selon l'une des revendications 8 ou 9, **caractérisé en ce que** le circuit analogique (80) de déviation de l'excédent de courant de charge comprend un composant (81) d'impédance variable, la déviation de l'excédent de courant de charge étant mise en oeuvre par une modification d'impédance dudit composant (81).

11. Gestionnaire de charge selon la revendication 10, **caractérisé en ce que** le composant d'impédance variable (81) est un transistor de puissance (81).

12. Gestionnaire de charge selon la revendication 11, **caractérisé en ce que** le transistor de puissance est un transistor Darlington (81).

13. Gestionnaire de charge selon l'une des revendications 9 à 12, **caractérisé en ce qu'**il comprend en outre un circuit électronique de mesure (40) de la différence de potentiel entre l'électrode négative (1) et la première électrode positive à air (2).

14. Gestionnaire de charge selon la revendication 13, **caractérisé en ce que** le circuit électronique de mesure (40) comprend un filtre stabilisateur de tension (2001).

15. Batterie comprenant au moins une cellule (10, 11, 12), la cellule comprenant au moins une électrode négative (1), une première électrode positive à air (2), une seconde électrode positive de dégagement d'oxygène (3) et un gestionnaire de charge (7) selon l'une des revendications 8 à 14.

## Patentansprüche

1. Verfahren zum Management des Ladens einer Luft-Metall-Batterie, umfassend mindestens eine Zelle (10, 11, 12), wobei die Zelle mindestens eine negative Elektrode (1), eine erste positive Luftelektrode (2) und eine zweite positive Sauerstoffentwicklungselektrode (3) aufweist, wobei das Verfahren für jede Zelle während des Anlegens eines Stroms an die Zelle, was während des Aufladens zum Fließen eines Ladestroms zwischen der negativen Elektrode (1) und der zweiten positiven Sauerstoffentwicklungselektrode (3) führt, folgendes umfasst:
- Vergleichen des Absolutwertes eines Potentials (301) der negativen Elektrode (1) mit einem kritischen Schwellenwert (50), wobei das Potential der negativen Elektrode (1) in Bezug auf die erste positive Luftelektrode (2) bestimmt wird, **dadurch gekennzeichnet, dass**:
- wenn der Absolutwert des Potentials (301) der negativen Elektrode (1) den Schwellenwert erreicht, Umleiten eines Ladestromüberschusses in Abhängigkeit von der Differenz zwischen dem Strom, der an die Zelle angelegt wird, und dem Ladestrom.

2. Verfahren nach Anspruch 1, **dadurch gekennzeichnet, dass** der Ladestromüberschuss einer Zelle in Richtung einer benachbarten Zelle oder in Richtung eines Laders (5) umgeleitet wird.

3. Verfahren nach einem der vorhergehenden Ansprüche, **dadurch gekennzeichnet, dass** der kritische Schwellenwert (50) für jede Zelle in Abhängigkeit von dem Potential der negativen Elektrode zu Ladebeginn festgelegt wird.

4. Verfahren nach einem der vorhergehenden Ansprüche, **dadurch gekennzeichnet, dass** der kritische Schwellenwert (50) in regelmäßigen Zeitabständen neu bewertet wird.

5. Verfahren nach einem der vorhergehenden Ansprüche, **dadurch gekennzeichnet, dass** eine Analogschaltung (80), die eine variable Impedanzkomponente (81) aufweist, vorgesehen wird, wobei das Umleiten des Ladestromüberschusses durch eine Impedanzänderung der Komponente (81) umgesetzt wird.

6. Verfahren nach Anspruch 5, **dadurch gekennzeichnet, dass** die Impedanz der Komponente (81) mindestens in Abhängigkeit von einer Größe variiert, die für eine Differenz zwischen dem Potential der negativen Elektrode und dem Schwellenwert repräsentativ ist, um am Ausgang der Komponente (81) den Ladestromüberschuss abzugeben.

7. Verfahren nach einem der vorhergehenden Ansprüche, **dadurch gekennzeichnet, dass** das Messen des Potentials der negativen Elektrode (1) eine Stabilisierungsfilterung der Spannung zwischen der negativen Elektrode (1) und der ersten Luftelektrode (2) aufweist.

8. Lademanager (7) für eine Zelle (10, 11, 12) einer Luft-Metall-Batterie, umfassend mindestens eine Zelle, wobei die Zelle mindestens eine negative Elektrode (1), eine erste positive Luftelektrode (2) und eine zweite positive Sauerstoffentwicklungselektrode (3) aufweist, wobei der Lademanager (7) für jede Zelle eine elektronische Schaltung (80) aufweist, die ausgebildet ist, während des Anlegens eines Stroms an die Zelle, was während des Aufladens zum Fließen eines Ladestroms zwischen der negativen Elektrode (1) und der zweiten positiven Sauerstoffentwicklungselektrode (3) führt:
- den Absolutwert eines Potentials (301) der negativen Elektrode (1) mit einem kritischen Schwellenwert (50) zu vergleichen, wobei das Potential der negativen Elektrode (1) in Bezug auf die erste positive Luftelektrode (2) bestimmt wird, **dadurch gekennzeichnet, dass**:
- wenn der Absolutwert des Potentials (301) der negativen Elektrode (1) den Schwellenwert (50) erreicht, einen Ladestromüberschuss in Abhängigkeit von der Differenz zwischen dem Strom, der an die Zelle angelegt wird, und dem Ladestrom umzuleiten.

9. Lademanager (7) nach Anspruch 8, **dadurch gekennzeichnet, dass** die Analogschaltung (80) den Ladestromüberschuss in Richtung einer benachbarten Zelle oder eines Laders (5) über einen Anschluss jeweils an die benachbarte Zelle oder an den Lader (5) umleitet.

10. Lademanager nach einem der Ansprüche 8 oder 9, **dadurch gekennzeichnet, dass** die Analogschaltung (80) zum Umleiten des Ladestromüberschusses eine Komponente (81) variabler Impedanz aufweist, wobei das Umleiten des Ladestromüberschusses durch eine Impedanzänderung der Komponente (81) umgesetzt wird.

11. Lademanager nach Anspruch 10, **dadurch gekennzeichnet, dass** die Komponente variabler Impedanz (81) ein Leistungstransistor (81) ist.

12. Lademanager nach Anspruch 11, **dadurch gekennzeichnet, dass** der Leistungstransistor ein Darlington-Transistor (81) ist.

13. Lademanager nach einem der Ansprüche 9 bis 12, **dadurch gekennzeichnet, dass** er ferner eine elektronische Schaltung zum Messen (40) der Potentialdifferenz zwischen der negativen Elektrode (1) und der ersten positiven Luftelektrode (2) aufweist.

14. Lademanager nach Anspruch 13, **dadurch gekennzeichnet, dass** die elektronische Schaltung zum Messen (40) einen Filter zur Spannungsstabilisierung (2001) aufweist.

15. Batterie, umfassend mindestens eine Zelle (10, 11, 12), wobei die Zelle mindestens eine negative Elektrode (1), eine erste positive Luftelektrode (2), eine zweite positive Sauerstoffentwicklungselektrode (3) und einen Lademanager (7) nach einem der Ansprüche 8 bis 14 aufweist.

## Claims

1. Method for managing the charge of a metal-air battery comprising at least one cell (10,11,12), the cell comprising at least a negative electrode (1), a first positive air electrode (2), and a second positive oxygen-release electrode (3), the method comprising, for each cell, during application of a current to the cell that results, during charging, in the flow of charging current between the negative electrode (1) and the second positive oxygen-release electrode (3):
- comparing the absolute value of a potential (301) of the negative electrode (1) to a critical threshold value (50), the potential of the negative electrode (1) being determined relative to the first positive air electrode (2);
**characterized in that**:
- when the absolute value of the potential (301) of the negative electrode (1) reaches the threshold value, diverting an excess charging current that is a function of the difference between the current applied to the cell and the charging current.

2. Method according to claim 1, wherein the excess charging current of a cell is diverted to a neighboring cell or to a charger (5).

3. Method according to one of the preceding claims, wherein, for each cell, the critical threshold value (50) is set based on the potential of the negative electrode when charging begins.

4. Method according to one of the preceding claims, wherein the critical threshold value (50) is re-evaluated at regular time intervals.

5. Method according to one of the preceding claims, wherein an analog circuit (80) comprising a component of variable impedance (81) is provided, the diverting of excess charging current being implemented by modifying the impedance of said component (81).

6. Method according to claim 5, wherein the impedance of the component (81) varies at least as a function of a quantity representative of a difference between the potential of the negative electrode and said threshold value, in order to deliver said excess charging current as output from the component (81).

7. Method according to one of the preceding claims, wherein the measurement of the potential of the negative electrode (1) comprises voltage stabilization filtering between the negative electrode (1) and the first air electrode (2).

8. Charge manager (7) for a cell (10, 11, 12) of a metal-air battery comprising at least one cell, the cell comprising at least a negative electrode (1), a first positive air electrode (2), and a second positive oxygen-release electrode (3), the charge manager (7) comprising an electronic circuit (80) for each cell, arranged so as to, during application of a current to the cell that results, during charging, in the flow of charging current between the negative electrode (1) and the second positive oxygen-release electrode (3):
- comparing the absolute value of a potential (301) of the negative electrode (1) to a critical threshold value (50), the potential of the negative electrode (1) being determined relative to the first positive air electrode (2);
**characterized in that**:
- when the absolute value of the potential (301) of the negative electrode (1) reaches the threshold value (50), diverting an excess charging current that is a function of difference between the current applied to the cell and the charging current.

9. Charge manager (7) according to claim 8, wherein the analog circuit (80) diverts the excess charging current to a neighboring cell or to a charger (5), via a respective connection to said neighboring cell or charger (5).

10. Charge manager according to one of claims 8 or 9, wherein the analog circuit (80) for diverting the excess charging current comprises a component (81) of variable impedance, the diverting of the excess charging current being implemented by changing the impedance of said component (81).

11. Charge manager according to claim 10, wherein the component of variable impedance (81) is a power transistor (81).

12. Charge manager according to claim 11, wherein the power transistor is a Darlington transistor (81).

13. Charge manager according to one of claims 9 to 12, further comprising an electronic circuit (40) for measuring the difference in potential between the negative electrode (1) and the first positive air electrode (2).

14. Charge manager according to claim 13, wherein the electronic measurement circuit (40) comprises a voltage stabilization filter (2001).

15. Battery comprising at least one cell (10, 11, 12), the cell comprising at least a negative electrode (1), a first positive air electrode (2), a second positive oxygen-release electrode (3), and a charge manager (7) according to one of claims 8 to 14.
